# EUROPÄISCHE PATENTANMELDUNG

(11) **EP 0 868 990 A2**
(43) Veröffentlichungstag der Anmeldung: **07.10.1998**
(21) Anmeldenummer: 98810191.1
(22) Anmeldetag: 06.03.1998
(51) Int. Cl.: B29C 45/77, B29C 33/00, B22D 17/32

(54) **Messung des Düsendrucks und/oder der Düsenanpresskraft in einer Giessmaschine**

(30) Priorität: 07.03.1997 CH 555/97
(71) Anmelder: SCHLÄPFER MESSTECHNIK AG, CH-8523 Hagenbuch (CH)
(72) Erfinder: Schläpfer, Bruno, 8523 Hagenbuch (CH)
(74) Vertreter: Patentanwälte Breiter + Wiedmer AG

(57) **Zusammenfassung**

Beim Messen des Düsendrucks und/oder der Düsenanpresskraft beim Spritzgiessen von Kunststoff oder beim Druckguss von Metall wird verflüssigte Masse unter hohem Druck über eine Spritzdüse (24) zu einem formenden Werkzeug geführt. Die Messwerte werden mit wenigstens einem Sensor (38, 52) ermittelt. Dieser ist im Bereich zwischen Spritzdüse (24) und Werkzeug in einer Last- (34) und/oder Last-/ Druckdose (44) angeordnet. Die entfernbare, massive Lastdose (34) oder Last-/ Druckdose (44) mit wenigstens einem Sensor (38,52) ist auf einem zentralen Angiesskanal eines stationären Werkzeugs befestigt oder durch die auf einem Schlitten verschiebbare Spritzdüse (24) auf diesen Angiesskanal (18) gepresst. Die erfindungsgemässe Vorrichtung dient der Herstellung von Druckgussformkörpern aus einem Metall, insbesondere Aluminium und Aluminiumlegierungen, oder Spritzgiessformkörpern aus einem Kunststoff, insbesondere Thermoplasten.

## Beschreibung

Die vorliegende Erfindung bezieht sich auf ein Verfahren und eine Vorrichtung zum Messen des Düsendrucks und/oder der Düsenanpresskraft beim Spritzgiessen von Kunststoffen oder beim Druckguss von Metall, wobei verflüssigte Masse unter hohem Druck über eine Spritzdüse zu einem formenden Werkzeug geführt wird, und zum Auswerten der Signale. Die Giessmaschine dient der Herstellung von Formkörpern aus einem Metall, insbesondere Aluminium oder Aluminiumlegierungen, oder aus einem Kunststoff, insbesondere Thermoplasten, welche Maschine eine Einspritz- und eine Formschliesseinheit umfasst.

Beim Metalldruckguss mit einer Einspritzeinheit konnte bisher der Düsendruck nicht gemessen werden, die Temperaturen sind zu hoch und der Druckanstieg so extrem steil und kurzzeitig, dass er explosionsartig erfolgt. Gerade bei Warmkammer-Druckgiessmaschinen kann jedoch die Düsendruckmessung wichtige Prozessinformationen bieten. Beispielsweise ermöglicht die Düsendruckmessung Aussagen über Druckverluste im Angiesskanal oder zeigt Druckverluste auf, welche durch einen undichten Einspritzzylinder verursacht werden. Dies ist zum Feststellen von vorbeugenden Instandhaltungsarbeiten wichtig.

Beim Kunststoffspritzgiessen ist die Düsendruckmessung an sich bekannt. Die heute erhältlichen Sensoren weisen jedoch eine zu kurze Standfestigkeit auf, weil der bei hohen Drücken und hohen Temperaturen plastifizierte Kunststoff abrasive Eigenschaften haben kann. Von verschiedenen Herstellern sind Sensoren im Handel, welche in eine Bohrung der Düsenwand eingesetzt werden und dann den Druck direkt messen, wobei jedoch die vorgenannten Probleme auftreten. Ein grosser Teil der direktmessenden Sensoren kann nur bei Betriebstemperatur abgeglichen werden, was die Anwendung zusätzlich erschwert.

In der EP,A1 0283524 wird eine Anordnung zur Messung des Druckes in einem rohrförmigen Körper beschrieben, beispielsweise in einer Düse einer Spritzgiessmaschine. Der hohe Druck verursacht in der rohrförmigen Düse eine Dehnung, welche mit Sensoren indirekt gemessen wird. Dadurch sind die Sensoren nicht direkt der Abrasion durch den Kunststoff ausgesetzt. Mit diesen Sensoren kann jedoch nicht statisch gemessen werden, da durch Temperaturänderungen und den hohen Druck bewirkte Dehnungen störend einwirken.

Alle bekannten Sensoren haben den Nachteil, dass vor deren Montage die Düsenwandung durchbohrt werden muss, und dass damit nicht während der Maschinenstellphase alleine gemessen werden kann.

Der vorliegenden Erfindung liegt die Aufgabe zugrunde, ein Verfahren und eine Vorrichtung der eingangs genannten Art zu schaffen, welche die vorstehend erwähnten Nachteile wesentlich vermindern oder beseitigen, insbesondere eine Düsendruckmessung ohne Durchbohrung der Düsenwandung gestatten und auf Metalle ausdehnen. Weiter sollen die Sensoren einfach einbaubar und das Verfahren kostengünstig betrieben werden können.

In bezug auf das Verfahren wird die Aufgabe erfindungsgemäss dadurch gelöst, dass die Messwerte mit wenigstens einem Sensor ermittelt werden, welche/r im Bereich zwischen Spritzdüse und Werkzeug auf einer Last- und/oder Last-Druckdose angeordnet ist/sind. Spezielle und weiterbildende Ausführungsformen des Verfahrens sind Gegenstand von abhängigen Patentansprüchen.

Im Bereich zwischen der Spritzdüse und dem Werkzeug kann eine zentrierbare Lastdose entfernbar eingesetzt werden, welche in der Regel auf der der Spritzdüse zugewandten Seite eine Last-/Druckdose aufweist. Grundsätzlich gibt es zwei Typen von solchen Last- und Last-/Druckdosen:
- Die Dose weist keine durchgehende Bohrung auf, sie kann deshalb nur ausserhalb der Arbeitsphase der Spritzgiessmaschine eingesetzt werden. Der Düsendruck wird in einer Aussparung mit einem Probevolumen zwischen der angepressten Spritzdüse und der Last-/Druckdose gemessen. Die Düsenanpresskraft wird meist statisch, vorzugsweise direkt auf der Lastdose in deren mittlerem Längenbereich, gemessen. Nach den Messungen wird die Lastdose mit der Last-/Druckdose wieder entfernt, die Arbeitsphase kann beginnen.
- Die Lastdose mit der Last-/Druckdose weist eine durchgehende Bohrung auf. Diese Dose wirkt in der Arbeitsphase funktionell wie eine Angiessbuchse und braucht nicht entfernt zu werden. Je nach Verfahrensparametern ist diese Dose vorteilhaft beheizbar. Für eine Testphase muss ein Kraft-/Drucksensor entsprechend angeordnet werden, beispielsweise seitlich im Kanal. Die Messung der Düsenanpresskraft erfolgt unverändert.

Nach einer speziellen Ausführungsform des Verfahrens kann sowohl die Düsenanpresskraft als auch der Düsendruck mit einem auf der Lastdose angeordneten Kraftsensor gemessen werden. Dieser muss hoch auflösend sein, so können die beiden Parameter als überlagerte Signale gemessen werden. Der Düsendruck beträgt nur etwa 1% der Düsenanpresskraft, was lediglich ein Rauschen auf dem letzteren Signal bewirkt.

Werden plastifizierbare Kunststoffe eingesetzt, so liegt die Arbeitstemperatur bei höchstens etwa 400°C. Beim Druckguss von Metallen werden Temperaturen bis etwa 800°C eingesetzt. Dieser hohe Temperaturbereich wäre auch für bezüglich der Temperatur robuste piezoelektrische Zellen zu hoch, im Bereich der Kraft-/Druckmesszelle wird gekühlt, insbesondere mit Wasser als Kühlmedium. Die Kühlung kann jedoch auch schon in niedrigeren Temperaturbereichen, bei Kunststoffspritzmaschinen, eingesetzt werden.

In bezug auf die Vorrichtung wird die Aufgabe erfindungsgemäss mit einer Druckgiessmaschine zur Herstellung von Formkörpern aus einem Metall, insbesondere Aluminium und Aluminiumlegierungen, oder einer Spritzgiessmaschine zur Herstellung von Formkörpern aus einem Kunststoff, insbesondere Thermoplasten gelöst. Die Vorrichtung umfasst eine Einspritz- und eine Formschliesseinheit und zeichnet sich dadurch aus, dass eine entfernbare, massive Lastdose oder Last-/Druckdose mit wenigstens einem Sensor auf einem zentralen Angiesskanal eines stationären Werkzeugs befestigt oder durch die auf einem Schlitten verschiebbare Spritzdüse auf diesen Angiesskanal gepresst ist. Spezielle und weiterbildende Ausführungsformen der Spritzgiessmaschine sind Gegenstand von abhängigen Ansprüchen.

Vorzugsweise umfasst die Lastdose auf der der Spritzdüse zugewandten Seite eine Last-/Druckdose mit wenigstens einem Kraft- und/oder Drucksensor.

Die erfindungsgemässe Vorrichtung wird zwischen der Spritzdüse und dem Werkzeug festgeklemmt. Die Lastdose, in der Regel mit einer Last-/Druckdose, ist zweckmässig so ausgebildet, dass sie bei zurückgefahrener Spritzdüse am Werkzeug auf den Angiesskanal zentriert befestigt ist, beispielsweise durch Schrauben oder Magnete, und am andern stirnseitigen Ende den Bereich der Düsenöffnung aufnehmen kann. Die integrierte Lastdose mit einem Kraftsensor misst nach dem Aufsetzen der Spritzdüse die Düsenanpresskraft.

Eine in Richtung der Spritzdüse aus der Kraft-/Druckdose zentrierende kleine Aussparung kann den Bereich der Düsenöffnung der aufgesetzten Spritzdüse aufnehmen und vollspritzbares Probevolumen bilden, wobei der Druck mittels eines direkt oder indirekt messenden Kraft-/Drucksensors gemessen wird. Diese Testdruckmessung kann auch bei erhöhten Temperaturen und bei abrasivsten verflüssigten Massen erfolgen. Bei sehr hohen Temperaturen, beispielsweise im Bereich von etwa 400°C und darüber, kann bzw. muss eine Kühleinrichtung angeordnet werden.

Im Prinzip sind alle bekannten für das Druck- oder Spritzgiessen eingesetzten Sensoren als Kraft- oder Kraft-/Drucksensor verwendbar. Als Kraftsensoren eignen sich insbesondere Dehnungsmessstreifen (DMS) oder Piezo-Druckaufnehmer. Als Drucksensoren sind insbesondere piezoelektrische oder resistive Zellen geeignet, welche auch bei höheren Temperaturen, bis etwa 400°C, einsetzbar sind. Die durch die Erfindung erzielten Vorteile können wie folgt zusammengefasst werden:
- Die Wandung der Spritzdüse muss nicht zur Anbringung eines Sensors durchbohrt werden, der Kraft-/Drucksensor ist stromab der Düsenöffnung, bevorzugt in deren Nähe, plaziert.
- Diese Plazierung erlaubt bei hohen Temperaturen eine Kühlung, was auch beim Metalldruckguss die Messung des Düsendrucks erlaubt.
- Gleichzeitig mit dem Düsendruck kann die Düsenanpresskraft gemessen werden.
- Die Plazierung des Kraft-/Drucksensors nach der Düsenöffnung erlaubt beim Druckguss und beim Spritzgiessen die Feststellung von Reibungsverlusten in der Spritzeinheit und im Rahmen der vorbeugenden Instandhaltung Abnutzungserscheinungen in der Schnecke oder des Rücksperringes.
- Die Last- und/oder Last-/Druckdosen mit den Sensoren können ohne jede Vorbereitung an die Maschine gebaut werden und sind sofort einsatzbereit. Die Montage kann mittels Schrauben oder Magneten erfolgen.
- Die Last- und Last-/Druckdose kann auch aufgeteilt werden, wodurch Düsendruck und Düsenanpresskraft einzeln gemessen werden können, falls nur ein Parameter von Interesse sein sollte.
- Die Lastdose und Last-/Druckdose können modular aufgebaut sein. Die einzelnen Teile oder die ganze Dose können Zentrierteile aufweisen.

Die Erfindung wird anhand von in der Zeichnung dargestellten Ausführungsbeispielen, welche auch Gegenstand von abhängigen Ansprüchen sind, näher erläutert. Es zeigen schematisch:
- - Fig. 1: einen Axialschnitt durch den Bereich Spritzdüse/Werkzeug einer Kunststoff-Spritzgiessmaschine,
- - Fig. 2: einen vergrösserten Bereich von Fig. 1,
- - Fig. 3: ein Monitorgerät mit Digitalanzeige,
- - Fig. 4: eine nochmals vergrösserte Variante des rechten Teils von Fig. 2, und
- - Fig. 5: einen Axialschnitt durch den funktionellen Teil einer Metalldruckgiessmaschine.

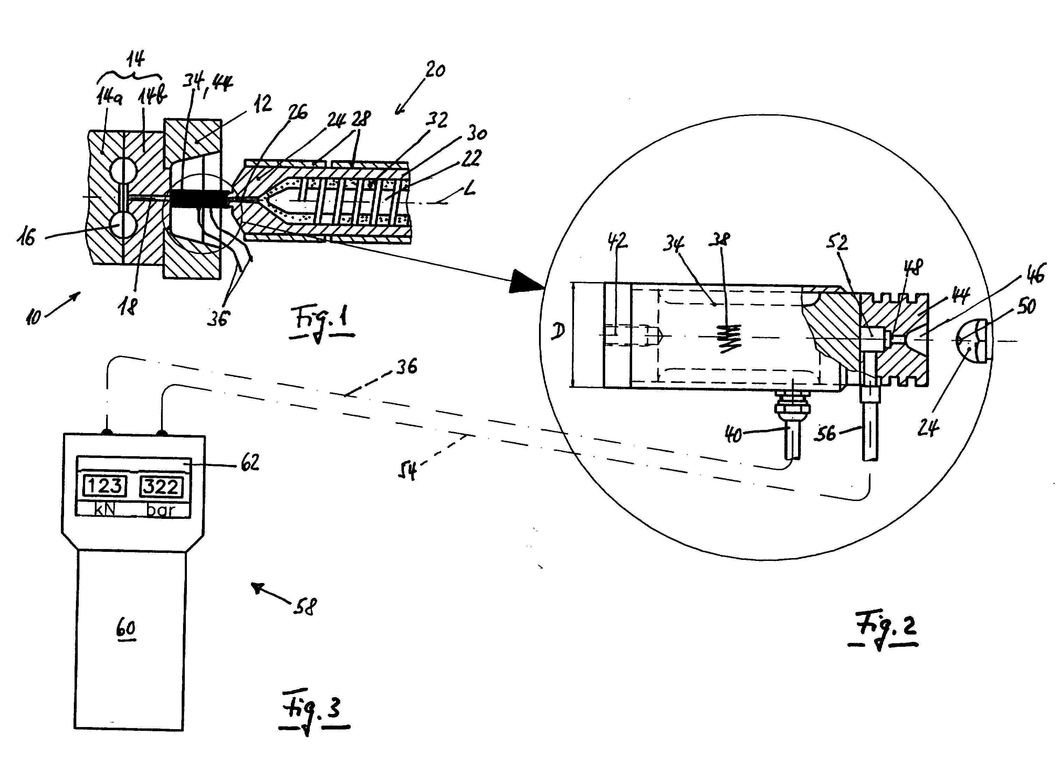

Fig. 1 zeigt die wesentlichen Teile einer Formschliesseinheit 10 einer Kunststoff-Spritzgiessmaschine, wie sie allgemein bekannt und beispielsweise in Dubbel, Taschenbuch für den Maschinenbau, 15. Auflage (1983), Seite 955, dargestellt ist. An einem in Fig. 1 nicht gezeigten Maschinenrahmen ist eine feste Aufspannplatte 12 mit dem festen Teil 14b des Werkzeugs 14 dargestellt, welches ebenfalls den beweglichen Teil 14a umfasst. Das Werkzeug 14 bildet einen Formhohlraum 16 mit einem den festen Teil 14b des Werkzeugs 14 durchgreifenden Angiesskanal 18 im Bereich der Längsachse L.

Eine Einspritzeinheit 20 umfasst im wesentlichen eine Schubschnecke 22, eine Spritzdüse 24 mit einem Düsenkanal 26 und eine Heizung 28, welche an der Spritzdüse 24 und an einem anschliessenden Schneckengehäuse 30 anliegt.

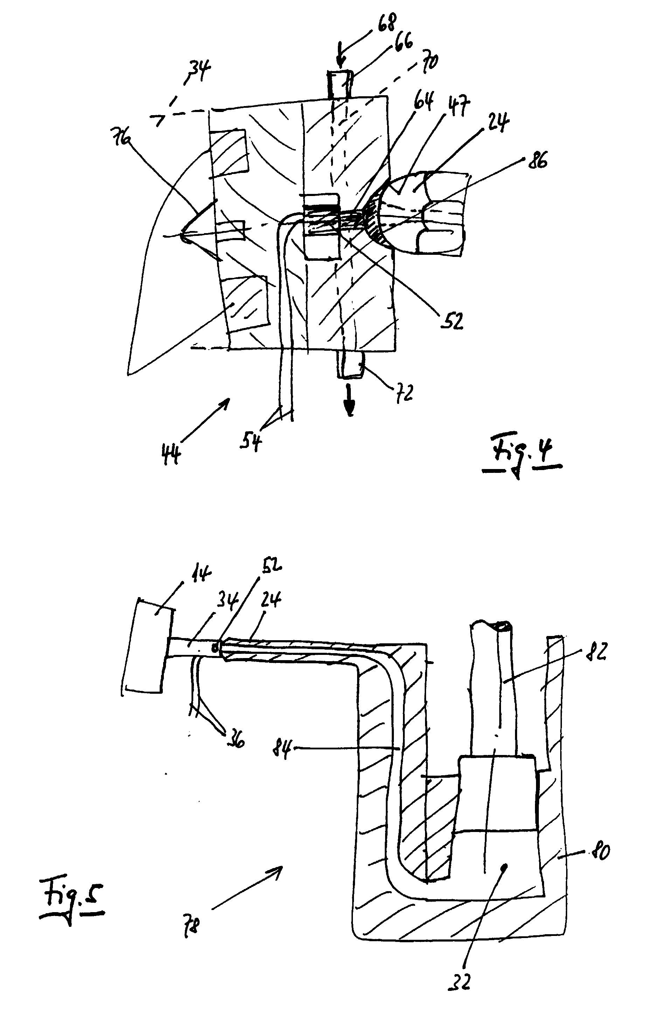

Die Schubschnecke 22 ist drehbar und längsverschiebbar gelagert. Beim Drehen der Schubschnecke wird eine verflüssigte Masse 32, bei Kunststoff auch Spritzgut genannt, in Richtung der Spritzdüse 24 gefördert und dabei homogen durchmischt. Im Bereich der Heizung 28 schmilzt die Masse und ist spätestens im Bereich des Düsenkanals 26 vollständig verflüssigt. Der eigentliche Arbeitsdruck beim Spritzgiessen wird durch eine Vorschubbewegung der Schubschnecke 22 erzeugt. Dadurch wird die Spritzdüse mit grosser Kraft gegen eine als Blackbox dargestellte Lastdose 34 und/oder Last-/Kraftdose 44 gedrückt, welche ihrerseits auf dem festen Teil 14b des Werkzeugs 14 aufliegt. Die Anpresskraft kann bereits gemessen werden. Das im später gezeigten Kraftsensor (38 in Fig. 2) erzeugte Signal wird über Kabel 36 zu einer Auswerte- und Anzeigeeinheit (58 in Fig. 3) geführt. Die Lastdose 34 ist in Fig. 2 im Detail gezeigt.

Die Lastdose 34, ein massiv ausgebildetes Metalleinsatzprofil, welches grossen, schlagartig auftretenden Krafteinwirkungen widerstehen kann, hat im vorliegenden Beispiel einen Durchmesser D von etwa 40 mm und einen Länge von etwa 100 mm. Im mittleren Längsbereich der Lastdose 34 sind Dehnungsmessstreifen 38 (DMS) ersichtlich. Solche DMS-Lastdosen messen statisch. Selbstverständlich können andere geeignete Systeme verwendet werden, wie beispielsweise Piezolastzellen, induktive Sensoren oder indirekt messende Lastzellen. Die erzeugten Signale werden über gestrichelt angedeutete Kabel 36 abgeführt, welche ihrerseits durch einen seitlichen Anschlussstutzen 40 austreten.

In Richtung des festen Teils 14b des Werkzeugs 14 (Fig. 1) sind Mittel 42 zum Zentrieren der Lastdose 34 vorgesehen. In Richtung der Spritzdüse 24 setzt sich die Lastdose 34 in einer Last-/Druckdose 44 mit gleicher Kraft- und Schlagfestigkeit fort. In Richtung der Spritzdüse 24 weist die Last-/Druckdose 44 eine zentrierte Aussparung 46 auf, welche nach dem Vorschub und dem Andrücken der Spritzdüse 24 auf der Umrandung 47 mit grossem Druck vollgespritzt wird. In dieser Testphase wird nur sehr wenig verflüssigte Masse verbraucht. Die Druckmessung erfolgt über einen längsverschiebbaren Stift 48, welcher in Ruhestellung der Oberfläche der Aussparung 46 bündig ist. Der hohe Druck der über eine Düsenöffnung 50 eingespritzten verflüssigten Masse wird über den Stift 48 als Krafteinwirkung auf einen Kraftsensor 52 geführt. Bei direkter statt wie vorliegend indirekter Messung ist 52 ein Drucksensor. Die Signale des Kraft-/Drucksensors 52 werden über gestrichelt gezeichnete Kabel 54 abgeführt, welche durch einen weiteren seitlichen Anschlussstutzen austreten.

Der Kraft-/Drucksensor 52 ist wegen den hohen Temperaturen vorzugsweise als Piezolastzelle ausgebildet. Es können aber auch andere geeignete Messtechniken verwendet werden, beispielsweise Sensoren nach der CH,A5 573592 oder CH,A5 679469, allenfalls kombiniert mit einem Kühlsystem.

Die Kabel 36, 54 führen zu einer Auswerte- und Anzeigeeinheit 58, welche auf einem Bedienungsfeld 60 auch die notwendigen Bedienungsorgane umfasst. Das Anzeigefeld 62 dieses Dual-Monitors zeigt eine Düsenanpresskraft von 123 kN und einen Düsendruck von 322 bar an, welche Werte beim letzten vorhergehenden Aufsetzen der Spritzdüse 24 gemessen worden sind.

In Fig. 4 ist eine erfindungsgemässe Last-/Druckdose 44 dargestellt, welche wie gestrichelt angedeutet auf eine Lastdose 34 (Fig. 2) oder direkt auf den festen Teil 14b des Werkzeugs 14 aufgesetzt werden kann.

In der zweiteilig ausgebildeten Last-/Druckdose ist ein direkt messender Drucksensor 52 mit Kabeln 54 zur Abführung der Signale eingesetzt. Dieser Drucksensor 52 entspricht beispielsweise einem Sensor gemäss der CH,A5 573592.

Die Spritzdüse 24 sitzt dichtend auf der Umrandung 47 der Aussparung 46 (Fig. 2) auf. Nach dem Einspritzen der verflüssigten Masse 32 drückt diese nach dem Eindringen in einen Verbindungskanal 64 direkt auf den Drucksensor 52.

Durch einen Zuführungsstutzen 66 wird ein Kühlmittel 68, im vorliegenden Fall Wasser, in ein punktiert angedeutetes, an sich bekanntes Kühlsystem 70 eingeleitet, welches nur angedeutete radiale und periphere Kanäle umfasst. Das erwärmte Kühlmittel 68 tritt durch einen Ausgangsstutzen 72 aus.

Der linke Teil der Last-/Druckdose 44 gemäss Fig. 4 umfasst Magnete 74, welche als Alternative zum Verschrauben wie ein Bajonettverschluss zum schnellen Anbringen verwendet werden können. Zum Zentrieren der Last-/Druckdose 44 auf der Lastdose 34 (Fig. 2) oder dem festen Teil 14b des Werkzeugs 14 (Fig. 1) ist ein einfach auswechselbares Zentrierteil 76 vorgesehen.

In Fig. 5 ist eine Einspritzeinheit 78 für Metall-Druckgiessmaschinen dargestellt. Die in der Praxis auf Schienen fahrbare oder auf einem Rollenlager verschiebbare Einspritzeinheit 78 kann mit sehr grosser Kraft auf die Lastdose 34 gedrückt werden.

Die Druckgiess-Einspritzeinheit 78 gemäss Fig. 5 umfasst im wesentlichen einen beheizbaren Giessbehälter 80, die verflüssigte Masse 32, im vorliegenden Fall eine Aluminiumlegierung, und einen den Spritzdruck erzeugenden Einspritzkolben 82. Das flüssige Metall wird durch einen Druckgiesskanal 84 gepresst. Mit einem Kraft-/Drucksensor 52 gemäss Fig. 2,4 kann nun auch der Druckverlust im Druckgiesskanal 84 beurteilt werden.

Bei allen anhand der Fig. 1 bis 5 beschriebenen Beispiele handelt es sich um Testmessungen, die Spritzdüse 24 wird wohl auf die Lastdose 34 bzw. die Last-/Druckdose 44 gepresst, es fliesst jedoch nur ein kleines Probevolumen 86 (Fig. 4) in die blind endende Aussparung 46 (Fig. 2) und allenfalls den Verbindungskanal 64 (Fig. 4). Nach diesen Testmessungen wird die Lastdose 34 und/oder die Last-/Druckdose 44 entfernt. Nun kann die Spritzdüse 24 in der Arbeitsphase bis zum Angiesskanal 18 des Werkzeugs 14 vorgeschoben und angedrückt werden.

Nach einer bereits angedeuteten Variante kann die Lastdose 34 und/oder die Last-/Druckdose 44 einen zentralen Kanal haben, durch welchen die verflüssigte Masse während der Arbeitsphase in das Werkzeug 14 gespritzt werden kann. Dies bedingt lediglich einige konstruktive Aenderungen bezüglich des Kraft-/Drucksensors 52, welcher im Bereich der Kanalwandung angeordnet ist. Damit kann die Last- und/oder die Last-/Druckdose bei der Messung des Düsendrucks und/oder der Düsenanpresskraft on-line eingesetzt werden, was neue technische Möglichkeiten eröffnet.

## Patentansprüche

1. Verfahren zum Messen des Düsendrucks und/oder der Düsenanpresskraft beim Spritzgiessen von Kunststoff oder beim Druckguss von Metall (32), wobei verflüssigte Masse unter hohem Druck über eine Spritzdüse (24) zu einem formenden Werkzeug (14) geführt wird, und zum Auswerten der Signale,
dadurch gekennzeichnet, dass
die Messwerte mit wenigstens einem Sensor (38,52) ermittelt werden, welche/r im Bereich zwischen Spritzdüse (24) und Werkzeug (14) in einer Last- (34) und/oder Last-/Druckdose (44) angeordnet ist/sind.

2. Verfahren nach Anspruch 1, dadurch gekennzeichnet, dass der Düsendruck stromab im Bereich der Düsenaustrittsöffnung (50), und/oder die Düsenanpresskraft direkt auf der Lastdose (34), vorzugsweise in deren mittlerem Längenbereich, gemessen wird.

3. Verfahren nach Anspruch 1 oder 2, dadurch gekennzeichnet, dass der Düsendruck in einer Aussparung (46) mit einem Probevolumen (86) zwischen der angepressten Spritzdüse (24) und der Last-/Druckdose (44) gemessen wird.

4. Verfahren nach Anspruch 1 oder 2, dadurch gekennzeichnet, dass Düsendruck und Düsenanpresskraft mit einem hoch auflösenden Kraftsensor (52) auf der Lastdose (34) als überlagerte Signale gemessen werden, wobei der Düsendruck etwa 1% der Düsenanpresskraft ausmacht.

5. Verfahren nach einem der Ansprüche 1 bis 4, dadurch gekennzeichnet, dass bei hohen Temperaturen der verflüssigten Masse (32), insbesondere bei etwa ≥ 400°C, im Bereich eines Kraft-/Drucksensors (52) für die Messung des Düsendrucks gekühlt wird.

6. Vorrichtung zur Herstellung von Druckgussformkörpern aus einem Metall, insbesondere Aluminium und Aluminiumlegierungen, oder Spritzgiessformkörpern aus einem Kunststoff, insbesondere Thermoplasten, welche Vorrichtung eine Einspritz- (78) und eine Formschliesseinheit (10) umfasst, zur Durchführung des Verfahrens nach einem der Ansprüche 1 bis 5,
dadurch gekennzeichnet, dass
eine entfernbare, massive Lastdose (34) oder Last-/Druckdose (44) mit wenigstens einem Sensor (38,52) auf einem zentralen Angiesskanal (18) eines stationären Werkzeugs (14) befestigt oder durch die auf einem Schlitten verschiebbare Spritzdüse (24) auf diesen Angiesskanal (18) gepresst ist.

7. Vorrichtung nach Anspruch 6, dadurch gekennzeichnet, dass die Lastdose (34) mit einem Kraftsensor (52) auf der der Spritzdüse (24) zugewandten Seite eine Last-/Druckdose (44) mit wenigstens einem Kraft- und/oder Drucksensor (52) aufweist.

8. Vorrichtung nach Anspruch 6 oder 7, dadurch gekennzeichnet, dass die Kraftsensoren (38) als Dehnungsmessstreifen oder als Piezo-Druckaufnehmer, die Drucksensoren (52) als piezoelektrische oder resistive Zellen ausgebildet sind.

9. Vorrichtung nach einem der Ansprüche 6 bis 8, dadurch gekennzeichnet, dass die Lastdose (34) und Last-/Druckdose (44) modular aufgebaut sind und vorzugsweise Zentrierteile (76) aufweisen.

10. Vorrichtung nach einem der Ansprüche 6 bis 9, dadurch gekennzeichnet, dass die Lastdose (34) und/oder die Last-/Druckdose (44) einen durchgehenden Kanal für die verflüssigte Masse (32) hat und vorzugsweise beheizbar ist.

11. Anwendung des Verfahrens nach einem der Ansprüche 1 bis 5 zum Bestimmen des Reibungs- oder Druckverlusts in einer Druckgiess-Spritzeinheit (78) mit einem Druckkanal (18) für die verflüssigte Masse.
